# EUROPEAN PATENT SPECIFICATION

(11) **EP 1 162 527 B1**
(45) Date of publication and mention of the grant of the patent: **26.05.2004**
(21) Application number: 01113416.0
(22) Date of filing: 01.06.2001
(51) Int. Cl.: G05B 23/02

(54) **A method in a process control system and a process control system**
Prozesssteuerungssystem und -verfahren
Méthode et système de commande d'un processus

(30) Priority: 05.06.2000 FI 20001341
(43) Date of publication of application: 12.12.2001
(73) Proprietor: Metso Automation Oy, 00880 Helsinki (FI)
(72) Inventor: Paunonen, Hannu, 33700 Tampere (FI)
(74) Representative: Leson, Thomas Johannes Alois, Dipl.-Ing.

(56) References cited:
- EP-A- 0 626 697
- EP-A- 0 716 364
- EP-A- 0 989 353
- US-A- 5 412 400
- US-A- 6 031 453

## Description

The invention relates to a method according to the preamble of claim 1 in a process control system. The invention also relates to a process control system.

In automatic control of industrial processes, real-time data and history data about the status of the process are displayed to a user at a terminal. For process control systems, there are graphic user interfaces, by means of which information about different parts of the process can be displayed graphically (with graphs, diagrams, tables, process graphic diagrams consisting of symbols). These user interfaces can be based on different operating systems which make it possible to process data for example in the form of windows on the screen of a display device. The different parts of the process, either as large systems or as more detailed images, are displayed to the user on the display device of the terminal as displays which may contain process charts, graphs, tables and, in general, any information illustrating the parts of the process and the run of the process.

In connection with the terminal, also an input device is provided, to give commands for controlling the process. The display device of the terminal is normally a display screen in a control room or the like, and the input device is normally a keyboard with its peripheral devices, including a device for controlling a cursor or pointer movable on the screen (*e.g.* a mouse). The input device can also be the screen of the display device itself, which is capable of directly receiving control commands, such as touches. The terminal can also be stationary on the field (outside the control room, near the process), or a portable or wearable device.

The displays can be arranged hierarchically so that, for example, by selecting a part of a display on a higher level of hierarchy, a display on a lower level of hierarchy is displayed. In a larger view on the display device, this part of the display can be displayed as a certain framing or in another way, and this can be selected by means of the cursor or pointer. Furthermore, the displays can be linked in such a way that by selecting a link in a display, a display linked with this display is accessed. Furthermore, it is possible that displays can be selected from menus which can be retrieved in the display device, or the address of the image can, in principle, be also directly written, if the displays are identified with specific address data, such as file names.

Graphic user interfaces applying data in the form of various displays to control and monitor an industrial process are presented *e.g.* in US patents 5,918,233 and 5,576,946 as well as in European patent 721611. It is typical of such user interfaces that the operator (person monitoring the process) can control the process by means of the user interface, *i*.*e*. to enter data by the input device to control the process and to monitor the run of the process, observe disturbance messages or alarms from different locations, *etc*. Furthermore, as is typical for the programs, situation specific instructions related *e.g.* to the relevant process portion or process step can be shown in the user interface.

A problem in the above systems is that for the purpose of process control, a process graphic diagram displayed on the display device of a terminal does not give a good picture of, for example, the physical location of various devices (pumps, valves, measuring devices, *etc*.) in the plant in which the process takes place. The chart displayed on the display device is a process graphic diagram based on the operation of the process and the devices related thereto. If the operating personnel detects, on the display, a disturbance message concerning, for example, a pump, this particular pump cannot be physically located on the basis of the process graphic diagram.

Furthermore, US patents 5,880,716 and 5,982,362 disclose systems in which a video camera is placed in the field. By means of this video camera, a real image is produced of the object, for example simultaneously with the corresponding process graphic diagram. The purpose of the systems is to facilitate the control of the process, and by means of them, it is possible, for example, to monitor in real time how the process is affected by the control measures taken at the terminal. For example, US patent 5,412,400 shows a display device in a process monitoring system where a real image taken by a television camera can be displayed in a separate window on a screen.

In addition, in process control technology, an aim has been to improve the informativity of real images. Therefore, for example German application publication 1954065 discloses a method for providing a stereoscopic effect in an image formed on a projection surface.

It is true that by the video technology disclosed in the above-mentioned publications it is possible to monitor real objects corresponding to symbols shown in process graphic diagrams, for example their behaviour and the effect of control measures on them, but this will hardly facilitate finding them in the field.

In document US-A-6 031 453 an observation system is disclosed by means of which components of an automation system are observable. A process is presented as a graphic representation. If a fault occurs, a fault message is displayed in the graphic representation. The location of the fault can be seen by using, for example, an image of a control cabinet. However, the physical location of the fault is not recognizable for an operator. In particular in more complex process systems, it is very difficult to physically find the defective part in the field.

It is an object of the invention to eliminate the aforementioned drawbacks and to present a method which is more capable than those of the prior art of giving information about the process both in process graphic diagram format and in the form of images illustrating the process environment itself (the field).

This object is achieved by a method of controlling a process in a process control system according to claim 1.

Furthermore, this object is achieved by a process control system according to claim 9.

Advantageous further developments are as set out in the dependent claims.

To the portions of the process graphic diagram displayed on the terminal are allotted graphic images indicating the physical location of the respective objects and stored as separate files. The graphic image can be displayed by the control device of the terminal, for example by activating the corresponding portion of the chart. This graphic image can be a three-dimensional image which is preferably of a type whose scale can be changed and which can be turned in different angles of viewing, and preferably it is possible to "wander" in it so that, after enlarging, the image can be turned again, that is, it is possible to "dive" into the image. The graphic image is not a video image but an artificially produced picture, best described as a "virtual image", which corresponds to a real view of the plant and which preferably can be controlled by a graphics program in the user interface. The graphic image can also be a two-dimensional map-like representation, for example a ground plan indicating the location of the object. The graphic image gives a good impression on where, for example, a place corresponding to a given portion in the process chart is located in the field itself, that is, it gives, in a way, the location of the place in a three-dimensional coordinate system. This considerably increases the possibilities for using the system for example in disturbance situations, in which one must, for example, get to the target location in the field. By means of the invention, malfunctioning objects can be located faster, and the disturbances can be removed faster. The invention can also be used for training, wherein for example new operating personnel becomes quickly familiarized with the plant, in which the process takes place.

In particular, the invention is suitable for use in connection with such a terminal which is movable, that is, it comprises a movable display device and an input device which can be carried along when moving in the plant. It can be a portable terminal or a so-called wearable terminal, in which latter case the display can be fixed for example at the height of the users head in such a way that it can be monitored when walking in the plant.

In this context, three-dimensional does not mean an image which should necessarily have a stereoscopic effect, but it is an image which graphically illustrates a three-dimensional space and from which the locations of different elements can be determined. By turning the image into different positions, a particularly informative three-dimensional image is obtained, because it can display, for example, parts concealed behind some elements, and it is thus more informative than a mere single standard, possibly zoomable view which is seen from one direction and which is by some means provided with a stereoscopic effect, or a mere video camera image.

Also other information can be connected with the graphic image, for example written location instructions, "navigation instructions". It is also possible that a 3-dimensional view and a ground plan image can be displayed together, for example in separate windows.

Further, it is possible to arrange an automatic function in connection with the graphic image in such a way that it displays an overall view of the target, for example a whole plant in which the process takes place, and after this, it zooms in on the target to be found, thus displaying it in a larger scale. This function can be arranged both in a 3-dimensional view and in a ground plan.

In the following, the invention will be described in more detail with reference to the appended drawings, in which
Fig. 1 shows the operating environment of a control system as a diagram, and
Fig. 2 shows one feasible embodiment of the invention as an image displayed on a display device in the user interface.

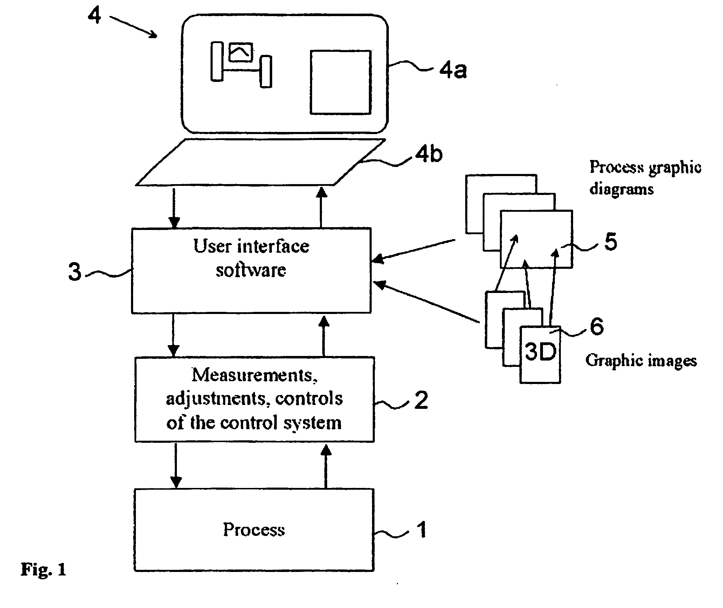

Figure 1 shows the operating environment of a process control system. The process 1 is, in principle, any industrial process comprising several variables which can be measured and which are monitored, controlled and/or adjusted. Thus, the process can comprise, for example, one or more closed control loops. Level 2 "Measurements, adjustments, controls of the control system" describes the measurements by the system and the operations conducted by the system. The arrow from the process describes information obtained from the process, such as measured values and/or status data. The arrow to the process describes measures to control and/or adjust the process. The third level describes the user interface software 3, by means of which the operator can monitor and control the process. The user interface software 3 is in bidirectional communication with the measurements, adjustments and controls of the control system. The user interface software 3 comprises several graphic images 5 which can be viewed with a terminal 4 using the user interface software. Images 5 show several objects which correspond to a specific location that can be defined with 3-dimensional coordinates in a plant in which the process to be controlled takes place. The terminal comprises a display device 4a and an input device 4b. The input device can comprise, for example, a keyboard and a mouse to move a cursor movable on the display and to control the functions produced by it. The input device 4b can also be a display screen operated by pointing with a finger. The terminal 4 can also be carried along in the field.

To these objects, which are often represented by symbols in the chart, correspond graphic images 6 which are indicated with the note "graphic images" in Fig. 1. These graphic images illustrate a concrete object (pump, valve, any other actuator, measuring device or a part of the process equipment, such as a tank, a pipe, *etc.*), generally any concrete part which is displayed as a specific symbol or set of symbols in the user interface. This object can be shown in the virtual image in such a manner that it is clearly visible, for example it can be represented in a manner that distinguishes it from the background of the virtual image. Also the whole image 5 may correspond to a certain physical object. The physical objects are shown as virtual images which are not camera views of the objects.

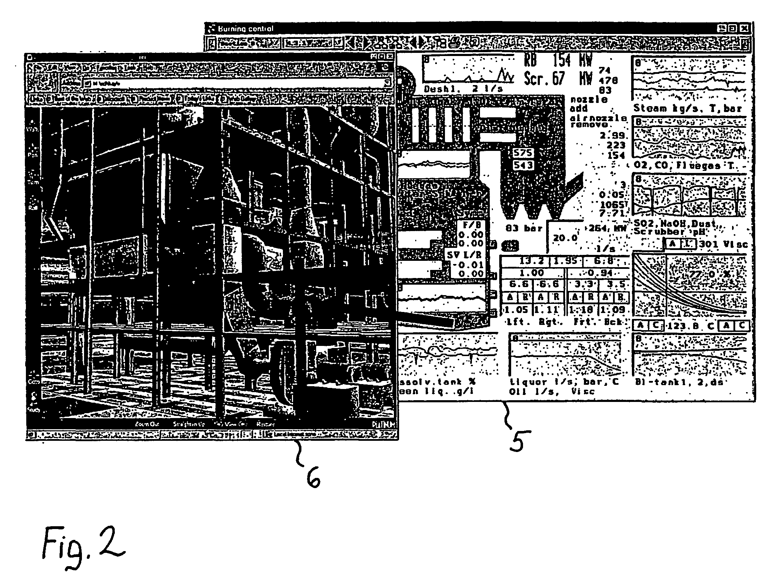

Figure 2 shows, as an example, how it is possible to display on the terminal, for example by selecting a given part of the process graphic diagram with the input device, a three-dimensional graphic image (virtual image) which can be displayed as a separate window or be changed over the original graphic diagram or be changed into a window that is already open but shows another graphic image. The graphic image window comprises control buttons, menus or the like, by which it is possible to control the graphic image itself, for example to enlarge it, to turn it in different angles of viewing, or to wander inside the graphic image.

When one wants to view a portion of an image that is currently displayed on the display device as said three-dimensional graphic image, it can be selected in several different ways. The point of the image may comprise a corresponding button which can be activated to access the graphic image. It is also possible that by moving the cursor or pointer in the image, those points at which a three-dimensional graphic image is accessible, are displayed and indicated in a suitable way. Similarly, by clicking a point in the image, a menu can be displayed, from which the graphic image is selected. Furthermore, it is possible that in connection with a certain event in the process, for example a disturbance, the corresponding three-dimensional graphic image is automatically displayed.

The way of displaying the graphic image itself can also vary. It is possible that in the same process graphic diagram, particularly when illustrating an overall view, different objects are indicated, which can be activated by means of a control device, for example a cursor or pointer, to display their details in a larger scale. These details can, in turn, be processed as separate graphic images. Such details can be distinguished in the three-dimensional graphic image for example by circling, by changed background, by a symbol, or in a corresponding way. The object which was initially selected in the process graphic diagram can be marked or highlighted in the graphic image in some suitable way to find it more easily.

It is also possible that a general view and a partial view are displayed in parallel in the display device, as separate three-dimensional graphic images which can be separately processed (turned, enlarged *etc*.). The graphic image can also display other information about the object it illustrates, for example in the case of a measuring device, the values given by the measuring device, or in the case of a tank, for example the level of the tank, or in general, all possible status data about the object.

Ground plans can be analogically used in the same way as the 3-dimensional graphic images (virtual images), that is, they can be displayed in corresponding windows.

In a process control system, a terminal (4) displays symbols illustrating parts of a process and information about the status of the process, related to concrete places in the operating environment of the process, such as actuators, pumps, measuring devices, process equipment parts, or the like. Corresponding graphic images (6) are allotted to said concrete places, indicating the location of the place in the process, and these images can be displayed in the operating environment of the process control system when the process is running. The image can be processed when it is displayed, for example in such a way that a 3-dimensional image can be turned in different angles of viewing and/or it can be enlarged.

## Claims

1. A method of controlling a process in a process control system in which a terminal is provided for displaying symbols illustrating process elements and information about the status of the process being related to the process elements in the operating environment of the process, such as actuators, pumps, measuring devices, process equipment parts, or the like,
**characterized by** the steps of:
providing, on said terminal, a process graphic diagram (5) for illustrating the process by symbols representing one or more process elements and information about the status of the process;
selecting a part of the process graphic diagram; and
providing, on said terminal, a dimensionally changeable graphic image (6), which is a virtual image corresponding to a 3-dimensional view of at least one of the one or more process elements, for modeling a real field environment portion of the process elements in correspondence to the selected part of the process graphic diagram, the graphic image being allotted to a process element and showing the location of the process element in the real field environment portion, wherein the graphic image is displayed in the operating environment of the process control system when the process is running.

2. The method according to claim 1, **characterized in that** the graphic image is displayed by activating with an input device of the terminal the representation corresponding to a desired process element and displayed on a display device of the terminal, such as a symbol, text, or the like that indicates the process element.

3. The method according to claim 1 or 2, **characterized in that** a separate graphic image is provided for each of a plurality of process elements.

4. The method according to claim 1 or 2, **characterized in that** at least some of the process elements are illustrated in the same graphic image and the place whose virtual image can be displayed as a graphic image of its own, is shown in the graphic image in a distinguished manner, such as by circling, by changed background, by a symbol, or in a corresponding manner.

5. The method according to any of the preceding claims, **characterized in that** the graphic image can be displayed with the display device in parallel with corresponding information indicating the status of the process, particularly together with information related to the process element being displayed, for example in such a way that the information is displayed ready within the retrieved graphic image or otherwise linked to it in such a way that it can be retrieved.

6. The method according to any of the preceding claims, **characterized in that** the terminal, which comprises the display device and the input device, is portable or wearable and it is in a wireless data transmission connection with the process control system.

7. The method according to any of the preceding claims, **characterized in that** the graphic image comprises one or several portions which can be displayed as a separate graphic image of its own, preferably in a more detailed view and/or provided with additional data.

8. The method according to any of the preceding claims, **characterized in that** the graphic image can be processed when it is displayed, for example in such a way that a 3-dimensional graphic image can be turned in different angles of viewing and/or it can be enlarged.

9. A process control system, comprising
a terminal (4) having a display device (4a) and an input device (4b);
a user interface software (3) connected to the terminal and to a process;
wherein the user interface software comprises:
one or more process graphic images (5), each comprising symbols or representations of process elements of a plant where the process to be controlled takes place, and
one or more graphic images (6) being a virtual image corresponding to a 3-dimensional view of at least one of the process elements, being dimensionally changeable and showing a model of a real field environment portion of the process elements, wherein the graphic images correspond to respective parts of at least one of said process graphic diagrams (5);
wherein the input device is adapted to select a part of a process graphic diagram and
the terminal is adapted to visualize a graphic image (6) allotted to a process element of the selected part of the process graphic diagram so as to show the location of the process element in the real field environment portion.

## Patentansprüche

1. Verfahren zum Steuern eines Prozesses bei einem Prozesssteuersystem, bei welchem ein Endgerät zum Anzeigen von Prozesselemente veranschaulichenden Symbolen und Informationen über den Status des Prozesses bereitgestellt ist, welche mit den Prozesselementen in der Betriebsumgebung des Prozesses, wie beispielsweise Betätigungseinrichtungen, Pumpen, Messvorrichtungen, Prozessanlagenteilen, oder dergleichen, in Beziehung stehen
**gekennzeichnet durch** die Schritte des
an dem Endgerät Bereitstellens eines graphischen Prozessschaubildes (5) zum Veranschaulichen des Prozesses **durch** ein oder mehr Prozesselemente repräsentierende Symbole und Informationen über den Status des Prozesses,
Auswählens eines Teils des graphischen Prozessschaubildes, und
an dem Endgerät Bereitstellens eines dimensional änderbaren graphischen Bildes (6), welches ein virtuelles Bild entsprechend einer dreidimensionalen Ansicht von zumindest einem der ein oder mehr Prozesselemente ist, um einen realen Feldumgebungsbereich des Prozesselements entsprechend zu dem ausgewählten Teil des graphischen Prozessschaubilds modellhaft darzustellen, wobei das graphische Bild einem Prozesselement zugewiesen ist und den Ort des Prozesselements in dem realen Feldumgebungsbereich darstellt, wobei das graphische Bild in der Betriebsumgebung des Prozesssteuersystems angezeigt wird, wenn der Prozess läuft.

2. Verfahren nach Anspruch 1, **dadurch gekennzeichnet, dass** das graphische Bild angezeigt wird, indem die einem gewünschten Prozesselement entsprechende Darstellung mit einer Eingabevorrichtung des Endgeräts aktiviert wird, und das graphische Bild auf einer Anzeigevorrichtung des Endgeräts angezeigt wird, wie beispielsweise ein Symbol, ein Text oder dergleichen, die das Prozesselement angeben.

3. Verfahren nach Anspruch 1 oder 2, **dadurch gekennzeichnet, dass** für jedes einer Vielzahl von Prozesselementen ein separates graphisches Bild bereitgestellt wird.

4. Verfahren nach Anspruch 1 oder 2, **dadurch gekennzeichnet, dass** zumindest einige der Prozesselemente in dem selben graphischen Bild veranschaulicht werden, und der Ort, dessen virtuelles Bild als ein eigenes graphisches Bild angezeigt werden kann, in dem graphischen Bild auf eine hervorgehobene Weise, wie beispielsweise durch Umkreisen, durch einen geänderten Hintergrund, durch ein Symbol, oder auf eine entsprechende Weise, dargestellt wird.

5. Verfahren nach einem der vorangehenden Ansprüche, **dadurch gekennzeichnet, dass** das graphische Bild mit der Anzeigevorrichtung parallel zu entsprechenden Informationen, die den Status des Prozesses angeben, insbesondere zusammen mit Informationen, die sich auf das angezeigte Prozesselement beziehen, beispielsweise auf eine derartige Weise angezeigt werden kann, dass die Informationen sofort innerhalb des wiedergewonnenen graphischen Bildes angezeigt werden, oder anderweitig mit ihm auf eine derartige Weise verbunden werden, dass es wiedergewonnen werden kann.

6. Verfahren nach einem der vorangehenden Ansprüche, **dadurch gekennzeichnet, dass** das die Anzeigevorrichtung und die Eingabeeinrichtung aufweisende Endgerät tragbar oder wearable ist und sich in einer drahtlosen Datenübertragungsverbindung mit dem Prozesssteuersystem befindet.

7. Verfahren nach einem der vorangehenden Ansprüche, **dadurch gekennzeichnet, dass** das graphische Bild einen oder mehrere Bereiche aufweist, welche vorzugsweise in einer detaillierteren Ansicht und/oder ausgestattet mit zusätzlichen Daten als ein separates eigenes graphisches Bild angezeigt werden können.

8. Verfahren nach einem der vorangehenden Ansprüche, **dadurch gekennzeichnet, dass** das graphische Bild verarbeitet werden kann, wenn es angezeigt wird, beispielsweise auf eine derartige Weise, dass ein dreidimensionales Bild in verschiedene Ansichtswinkel gedreht werden kann und/oder vergrößert werden kann.

9. Prozesssteuersystem, mit
einem Endgerät (4) mit einer Anzeigevorrichtung (4a) und einer Eingabevorrichtung (4b),
einer Benutzerschnittstellensoftware (3), welche mit dem Endgerät und mit einem Prozess verbunden ist,
wobei die Benutzerschnittstellensoftware aufweist,
ein oder mehr graphische Prozessbilder (5), wobei jedes davon Symbole oder Darstellungen von Prozesselementen einer Anlage aufweist, bei welcher der zu steuernde Prozess stattfindet, und
ein oder mehr graphische Bilder (6), welche ein virtuelles Bild entsprechend einer dreidimensionalen Ansicht von zumindest einem der Prozesselemente sind, wobei das eine oder die mehr graphische(n) Bild(er) dimensional änderbar ist/sind und ein Modell eines realen Feldumgebungsbereichs der Prozesselemente zeigt/zeigen, wobei die graphischen Bilder jeweiligen Teilen von zumindest einem der graphischen Prozessschaubilder (5) entsprechen,
wobei die Eingabevorrichtung dahingehend ausgestaltet ist, um einen Teil eines graphischen Prozessschaubilds auszuwählen, und
das Endgerät dahingehend ausgestaltet ist, um ein graphisches Bild (6) zu visualisieren, welches einem Prozesselement des ausgewählten Teils des graphischen Prozessschaubilds zugewiesen ist, um so den Ort des Prozesselements in dem realen Feldumgebungsbereich darzustellen.

## Revendications

1. Procédé de commande d'un processus dans un système de commande d'un processus dans lequel un terminal est fourni pour afficher des symboles illustrant les éléments et les informations d'un processus à propos de l'état du processus qui se rapportent aux éléments du processus dans l'environnement de fonctionnement du processus, comme des actionneurs, des pompes, des dispositifs de mesure, des parties d'équipement du processus, ou autres,
**caractérisé par** les étapes consistant à :
fournir, sur ledit terminal, un diagramme graphique de processus (5) pour illustrer le processus par des symboles représentant un ou plusieurs éléments et informations de processus à propos de l'état du processus ;
sélectionner une partie du diagramme graphique de processus ; et
fournir, sur ledit terminal, une image graphique pouvant changer dimensionnellement (6), qui est une image virtuelle correspondant à une vue en trois dimensions d'au moins un du ou des éléments du processus, pour modeler une partie d'environnement de champ réel des éléments du processus en correspondance avec la partie sélectionnée du diagramme graphique de processus, l'image graphique étant attribuée à un élément du processus et montrant l'emplacement de l'élément du processus dans la partie d'environnement de champ réel, l'image graphique étant affichée dans l'environnement de fonctionnement du système de commande de processus lors du déroulement du processus.

2. Procédé selon la revendication 1, **caractérisé en ce que** l'image graphique est affichée en activant avec un dispositif d'entrée du terminal la représentation correspondant à un élément du processus souhaité et affiché sur un dispositif d'affichage du terminal, comme un symbole, du texte, ou autres, qui indique l'élément du processus.

3. Procédé selon la revendication 1 ou 2, **caractérisé en ce qu'**une image graphique séparée est fournie pour chacun d'une pluralité d'éléments du processus.

4. Procédé selon la revendication 1 ou 2, **caractérisé en ce qu'**au moins certains des éléments du processus sont illustrés dans la même image graphique et l'endroit dont l'image virtuelle peut être affichée en tant que propre image graphique, est illustré dans l'image graphique d'une manière distincte, comme par un cercle, un arrière-plan modifié, un symbole, ou d'une manière correspondante.

5. Procédé selon l'une quelconque des revendications précédentes, **caractérisé en ce que** l'image graphique peut être affichée avec le dispositif d'affichage en parallèle aux informations correspondantes indiquant l'état du processus, particulièrement avec les informations liées à l'élément du processus affiché, par exemple de manière à ce que les informations soient affichées directement dans l'image graphique extraite ou autrement liées à elle de façon à ce qu'elles soient extraites.

6. Procédé selon l'une quelconque des revendications précédentes, **caractérisé en ce que** le terminal, qui comprend le dispositif d'affichage et le dispositif d'entrée, est transportable ou portable sur soi et il est dans une connexion de transmission de données sans fil avec le système de commande de processus.

7. Procédé selon l'une quelconque des revendications précédentes, **caractérisé en ce que** l'image graphique comprend une ou plusieurs parties qui peuvent être affichées en tant que propre image graphique séparée, de préférence dans une vue plus détaillée et/ou fournie avec des données supplémentaires.

8. Procédé selon l'une quelconque des revendications précédentes, **caractérisé en ce que** l'image graphique peut être traitée lorsqu'elle est affichée, par exemple de manière à ce qu'une image graphique en trois dimensions puisse être tournée sous différents angles de vue et/ou puisse être agrandie.

9. Système de commande d'un processus, comprenant :
un terminal (4) ayant un dispositif d'affichage (4a) et un dispositif d'entrée (4b) ;
un logiciel interface utilisateur (3) connecté au terminal et à un processus ;
dans lequel le logiciel interface utilisateur comprend :
une ou plusieurs images graphiques de processus (5), chacune comprenant des symboles ou des représentations des éléments de processus d'une installation dans laquelle a lieu le processus à commander, et
une ou plusieurs images graphiques (6) étant une image virtuelle correspondant à une vue en trois dimensions d'au moins un des éléments de processus, pouvant changer dimensionnellement et
montrant un modèle d'une partie d'environnement de champ réel des éléments de processus, les images graphiques correspondant aux parties respectives d'au moins un desdits diagrammes graphiques de processus (5) ;
dans lequel le dispositif d'entrée est adapté pour sélectionner une partie d'un diagramme graphique d'un processus et
le terminal est adapté pour visualiser une image graphique (6) attribuée à un élément de processus de la partie sélectionnée du diagramme graphique de processus de façon à illustrer l'emplacement de l'élément de processus dans la partie d'environnement de champ réel.
